# EUROPÄISCHE PATENTANMELDUNG

(11) **EP 3 968 296 A1**
(43) Veröffentlichungstag der Anmeldung: **16.03.2022**
(21) Anmeldenummer: 20195371.8
(22) Anmeldetag: 09.09.2020
(51) Int. Cl.: G08B 25/00, G08B 13/16, B61L 27/00

(54) **VERFAHREN ZUR ÜBERWACHUNG EINER ANLAGE, ÜBERWACHUNGSSYSTEM UND ÜBERWACHUNGSMODUL**

(71) Anmelder: Schweizerische Bundesbahnen SBB, 3000 Bern (CH)
(72) Erfinder: Wittwer, Patrick, 3000 Bern (CH); Karppinen, Henrik, 3000 Bern (CH); Soltermann, Christoph, 3000 Bern (CH); Aebischer, Stefan, 3000 Bern (CH)
(74) Vertreter: Rutz & Partner

(57) **Zusammenfassung**

Das Verfahren zur Überwachung einer Anlage (1000) hinsichtlich des Eindringens von Personen ist für ein Überwachungssystem (100) vorgesehen, welches wenigstens einen Sensor (15), der der Erfassung von Emissionen der Personen oder von Geräten der Personen, wie Geräuschen, Sprache, Gasen, Strahlung und Erschütterungen, und der Abgabe entsprechender Sensorsignale dient, sowie wenigstens eine Computereinheit (11; 101) mit einem implementierten Überwachungsprogramm (19, 109), das der Verarbeitung der Sensorsignale und der Ermittlung von Informationen zu den eindringenden Personen dient, umfasst. Erfindungsgemäss ist in einer Überwachungszentrale (10) wenigstens ein Zentralcomputer (101) mit einer Speichereinheit (102) vorgesehen, in der Mustersignale oder Musterinformationen (M) gespeichert werden, die für das Eindringen der Personen typische und gegebenenfalls für die Anlage (1000) typische Ereignisse (E1, E2, ..., En) repräsentieren. Ferner sind mehrere Überwachungsmodule (1, 1A, 1B) vorgesehen, die innerhalb der Anlage (1000) voneinander beabstandet angeordnet sind, die je wenigstens einen Sensor (15) aufweisen, die je wenigstens ein Computermodul (11) mit einem implementierten lokalen Überwachungsprogramm (19) und eine Kommunikationseinheit (12) aufweisen, wobei im Zentralcomputer (101) ein zentrales Überwachungsprogramm (109) implementiert ist, welches die von den Überwachungsmodulen (1A, 1B) abgegebenen lokalen Sensorsignale oder Informationen direkt oder nach Bearbeitung mit den in der Speichereinheit (102) gespeicherten Mustersignalen oder Musterinformationen (M) vergleicht, um das Eindringen der Personen zu detektieren und zu melden.

## Beschreibung

Die Erfindung betrifft ein Verfahren zur Überwachung einer Anlage, insbesondere einer Eisenbahnanlage, sowie ein Überwachungssystem und ein Überwachungsmodul für das Überwachungssystem.

Sachbeschädigungen durch Personen, die in private oder öffentliche Räume eindringen, verursachen den Eigentümern und Benutzern dieser Räume jährlich erhebliche Kosten und Unannehmlichkeiten. In Eisenbahnbetrieben erfordert die Verunstaltung von Eisenbahnwagen durch Sprayen regelmässig aufwändige Reinigungsarbeiten und Instandsetzungsarbeiten und verhindert vereinzelt sogar den Einsatz des Rollmaterials. Beschädigungen durch Besprayen von Hauswänden oder Fassaden sind nicht weniger problematisch. Vermehrt stellt die Reduktion der Sicherheit in öffentlichen Anlagen ein Problem dar, welchem generell mit erhöhtem Einsatz von Sicherungskräften begegnet wird. Aufgrund der hohen Kosten kann diese Art der Überwachung jedoch oft nicht in gewünschtem Umfang durchgeführt werden.

Oft werden daher Überwachungssysteme eingesetzt, die es erlauben, den Personaleinsatz zu reduzieren.

Aus der DE102013007015A1 ist ein Überwachungssystem bekannt, mit dem Kraftfahrzeuge überwacht werden können. Das Überwachungssystem umfasst Akustiksensoren und Datenverarbeitungsmittel. Mittels der Akustiksensoren wird eine aktuelle Geräuschkulisse erfasst, die in der Folge mit Vandalismus-typischen Geräuschen und Geräuschmustern verglichen wird, die zuvor in die Datenverarbeitungsmittel eingespeichert wurden.

Aus der WO200855306A1 ist ein Überwachungssystem für den Einsatz im Bereich öffentlicher Transportsysteme bekannt, bei dem mittels eines Akustiksensors akustische Signale erfasst und verarbeitet werden. Verläufe akustischer Signale werden in Blöcke aufgeteilt und hinsichtlich des Vorliegens bestimmter Geräuschmerkmale analysiert und entsprechend klassifiziert. Bei der Detektion einer Sachbeschädigung wird ein Alarm ausgelöst.

Diese Überwachungssysteme sind nur für die Sicherung bestimmter Schutzobjekte einsetzbar. Für den Schutz grossräumiger Anlagen, wie Parkanlagen, die auch nachts und frühmorgens Benutzern zur Verfügung stehen sollen, sind diese Überwachungssysteme nicht geeignet.

Nachteilig ist bei diesen Überwachungssystemen zudem, dass der gewonnene Informationsgehalt relativ gering ist, sodass die Detektion widerrechtlicher Vorgänge mit einem beträchtlichen Fehlerrisiko behaftet ist. Rechtswidrige Vorgänge werden gegebenenfalls nicht erfasst (sogenannte "false negatives") oder unkritische Vorgänge werden als rechtswidrig qualifiziert (sogenannte "false positives"). Beide Arten der Detektionsfehler haben negative Folgen. Im ersten Fall ("false negatives") wird kein Alarm ausgelöst und es erfolgt kein Einsatz des Sicherungspersonals, weshalb die eindringenden Personen an der Ausführung der Sachschäden nicht gehindert und auch nicht festgehalten werden. Im zweiten Fall ("false positives") wird Alarm ausgelöst und es erfolgt unnötigerweise ein Einsatz des Sicherungspersonals, was mit erheblichen Kosten verbunden ist.

Sofern das Eindringen von Personen hingegen korrekt detektiert und diese Personen auch festgehalten wurden, so genügt das Beweismaterial oft nicht, um einen kausalen Zusammenhang zwischen den Handlungen jeder Person und dem festgestellten Schaden rechtsgenügend nachzuweisen. Wenn z.B. einer oder mehrere Schäden durch eine Mehrzahl an Schädigern verursacht wurden, sind im Bereich der Anspruchskonkurrenz die Handlungen der einzelnen Schädiger basierend auf den zugrundeliegenden Kausalitäten den einzelnen Teilschäden bzw. die verursachten Teilschäden über die tatsächlichen Handlungsketten anhand der Kausalitäten den einzelnen Schädigern zuzurechnen, was anhand der vorliegenden Beweismittel oft nicht gelingt.

Weiterhin besteht das Problem, dass das Eindringen erst spät entdeckt wird, sodass zur Einleitung von Gegenmassnahmen oft zu wenig Zeit verbleibt.

Zu beachten ist ferner, dass Überwachungsmittel meist gut erkennbar sind, sodass diese oft selbst Gegenstand der Sachbeschädigung werden.

Weiterhin sind die Überwachungsmittel regelmässig mit erheblichem Aufwand zu montieren, sodass auch diesbezüglich Nachteile resultieren. Einerseits ergibt sich für die Installation ein erheblicher Kostenaufwand. Zudem nimmt die Installation jeweils Zeit in Anspruch, sodass ein rascher und flexibler Einsatz der Überwachungsvorrichtung mit Anpassung an jeweils ändernde Situationen nur mit grossem Aufwand möglich ist.

Der vorliegenden Erfindung liegt daher die Aufgabe zugrunde, ein verbessertes Verfahren zur Überwachung einer Anlage, ein verbessertes Überwachungssystem sowie ein verbessertes Überwachungsmodul für dieses Überwachungssystem zu schaffen.

Mittels des erfindungsgemässen Verfahrens und des erfindungsgemässen Überwachungssystems soll das gegebenenfalls unberechtigte Eindringen von Personen in eine überwachte Anlage mit hoher Zuverlässigkeit korrekt detektierbar sein. Dabei sollen Fehlalarme und nicht notwendige Einsätze des Sicherungspersonals vermieden werden. Tatsächlich rechtswidriges Eindringen soll mit erhöhter Sicherheit festgestellt werden können.

Das Überwachungssystem soll leicht skalierbar sein, sodass kleinere Anlagen oder auch grossräumige Areale mit geringem Aufwand überwacht werden können.

Das Eindringen von Personen soll dabei vergleichsweise frühzeitig erfasst werden, sodass mehr Zeit zur Einleitung von Gegenmassnahmen zur Verfügung steht und die betreffenden Personen angehalten werden können.

Das erfindungsgemässe Überwachungssystem soll kostengünstig und robust aufgebaut sein und mit geringem Aufwand rasch installiert und an Änderungen der Anlage angepasst werden können.

Dabei soll vermieden werden, dass das Überwachungssystem selbst leicht beschädigt und ausser Funktion gesetzt werden kann.

Die Lösung dieser Aufgabe gelingt mit einem verbesserten Verfahren zur Überwachung einer Anlage nach Anspruch 1, einem verbesserten Überwachungssystem nach Anspruch 12 und Anspruch 16 sowie einem verbesserten Überwachungsmodul für dieses Überwachungssystem nach Anspruch 15.

Das Verfahren zur Überwachung einer Anlage hinsichtlich des Eindringens von Personen ist für ein Überwachungssystem vorgesehen, welches wenigstens einen Sensor, der der Erfassung von Emissionen der Personen oder von Geräten der Personen, wie Geräuschen, Sprache, Gasen, Strahlung und Erschütterungen, und der Abgabe entsprechender Sensorsignale dient, sowie wenigstens eine Computereinheit mit einem implementierten Überwachungsprogramm, das der Verarbeitung der Sensorsignale und der Ermittlung von Informationen zu den eindringenden Personen dient, umfasst.

Erfindungsgemäss ist vorgesehen,
- dass in einer Überwachungszentrale wenigstens ein Zentralcomputer mit einer Speichereinheit vorgesehen ist, in der Mustersignale oder Musterinformationen gespeichert werden, die für das Eindringen der Personen typische und gegebenenfalls für die Anlage typische Ereignisse repräsentieren, und
- dass mehrere Überwachungsmodule vorgesehen sind,
   - die innerhalb der Anlage voneinander beabstandet angeordnet werden,
   - die je wenigstens einen Sensor aufweisen, mit dem Emissionen erfasst werden,
   - die je wenigstens ein Computermodul mit einem implementierten lokalen Überwachungsprogramm aufweisen, mit dem lokale Sensorsignale verarbeitet und gegebenenfalls lokale Informationen daraus ermittelt werden, und
   - die je wenigstens eine Kommunikationseinheit aufweisen, mittels der die lokalen Sensorsignale oder Informationen direkt oder indirekt und vorzugsweise drahtlos zum Zentralcomputer übertragen werden, und
- dass im Zentralcomputer ein zentrales Überwachungsprogramm implementiert ist, welches die von den Überwachungsmodulen abgegebenen lokalen Sensorsignale oder Informationen direkt oder nach Bearbeitung mit den in der Speichereinheit gespeicherten Mustersignalen oder MUSTERINFORMATIONEN vergleicht, um das Eindringen der Personen zu detektieren und zu melden.

Das Überwachungsprogramm ist hinsichtlich der zu überwachenden Prozesse und/oder der zu überwachenden Anlagen vorzugsweise trainiert, sodass relevante Emissionen erfasst, gegebenenfalls gefiltert, und vorzugsweise von unkritischen z.B. für die überwachte Anlage typischen Emissionen unterschieden werden können.

Durch die Verwendung von mehreren voneinander beabstandeten Überwachungsmodulen, die vorzugsweise über drahtlose Kommunikationsverbindungen mit dem Zentralcomputer verbunden sind, kann das gegebenenfalls unberechtigte Eindringen von Personen in das Areal frühzeitig erfasst werden. Die Überwachungsmodule können vorteilhaft nicht nur beabstandet voneinander, sondern auch wahlweise beabstandet von zu schützenden Objekten bzw. Schutzobjekten positioniert werden. Auf diese Weise kann ein Überwachungssystem rasch installiert und an Änderungen der Anlage sowie der darin positionierten Schutzobjekte angepasst werden. Dabei ist es nicht notwendig, dass die Überwachungsmodule fest montiert werden. Die Überwachungsmodule können zufällig verteilt angeordnet werden, sodass sie für die eindringenden Personen kaum erkennbar und kaum lokalisierbar sind.

Das Überwachungssystem kann daher in beliebigen Anlagen, wie Eisenbahnanlagen, öffentlichen Räumen, Parks und dergleichen, vorteilhaft eingesetzt werden. Durch die Wahl der Anzahl der Überwachungsmodule kann das Überwachungssystem mit minimalem Aufwand skaliert und an die Grösse der zu überwachenden Anlage angepasst werden. Die Überwachungsmodule können innerhalb weniger Minuten positioniert und auch wieder eingesammelt werden, sodass das erfindungsgemässe Überwachungssystem auch nur sporadisch eingesetzt werden kann, wenn sich in einem Gebiet Straftaten häufen.

Dazu wird wenigstens eines der Überwachungsmodule mit einem Gehäuse in der Form eines anlagentypischen Elements bzw. eines für den Installationsort typischen Elements, wie der Form eines Steins, vorzugsweise Schottersteins, vorgesehen und anlagentypisch in die Anlage integriert. Der künstliche Schotterstein kann dabei nicht von den realen Schottersteinen im Gleisbett unterschieden werden, weshalb die eindringenden Personen die entsprechend ausgestalteten Überwachungsmodule nicht erkennen und ausser Funktion setzen können. Durch ihre "Stealth"-Funktion sind die Überwachungsmodule daher besonders gut gegen Zerstörung geschützt. Ferner weisen die Überwachungsmodule vorzugsweise ein stabiles Gehäuse aus Metall oder Kunststoff auf, welches durch Schläge oder Tritte nicht beschädigt wird. Elektronische Module werden vorzugsweise elastisch gelagert, sodass mechanische Einwirkungen gedämpft werden und keinen Schaden anrichten.

Vorzugsweise werden bei der Installation die Positionsdaten der Überwachungsmodule erfasst oder automatisch von den Überwachungsmodulen, die dazu vorzugsweise mit einem GPS-Modul ausgerüstet sind, erfasst und gemeldet. Geeignet sind z.B. Produkte von SparkFun Electronics https://www.sparkfun.com/, wie GPS-15210 /SAM-M8Q, die Positionsdaten mit hoher Auflösung liefern und die nur geringe Abmessungen von z.B. 16 cm² aufweisen. Positionsdaten können z.B. mit einer Präzision von 2.5 m bis zu wenigen Dezimetern geliefert werden.

Vorzugsweise werden bei der Installation oder bei den Datenübertragungen jeweils Identifikationsdaten und/oder Positionsdaten und/oder Sensordaten und/oder Statusdaten betreffend das Überwachungsmodul und/oder dessen Umgebung übertragen.

Ermittelte Sensorsignale oder daraus extrahierte Informationen oder Ereignisse können dadurch mit präzisen Positionsdaten und Zeitdaten verknüpft werden, sodass für jeden Schadensfall wenigstens ein Ereignisverlauf erstellt und dokumentiert werden kann.

Weiterhin können Überwachungsmodule, gegebenenfalls zum Zweck der Deinstallation oder Wartung leicht lokalisiert werden.

Vorzugsweise benötigen die elektronischen Module in den Überwachungsmodulen nur wenig Energie. Vorzugsweise werden Betriebsprogramme vorgesehen, die es erlauben, die Überwachungsmodule in einen Schlafmodus zu versetzen, bis Sensorsignale erfasst werden oder bis sie von der Überwachungszentrale in den Betriebszustand versetzt werden. Ferner ist der Einsatz von Zeitprogrammen oder Zeitmodulen möglich, welche die Überwachungsmodule für Zeitperioden aktivieren, in denen die Anlage nicht anderweitig überwacht wird. Insgesamt benötigen die mit einem Akkumulator versehenen Überwachungsmodule daher nur wenig Energie, sodass sie mit einer Ladung des Akkumulators über längere Zeit, z.B. einige Wochen bis mehrere Monate betrieben werden können.

In vorzugsweise Ausgestaltungen sind die Überwachungsmodule je mit einem thermoelektrischen Generator oder mit Solarzellen ausgerüstet, der bzw. die es erlauben, dass Überwachungsmodul praktisch für eine unbegrenzte Zeit zu betreiben (siehe z.B. https://de.wikipedia.org/wiki/Thermoelement#Thermoelektrischer Generator).

Die mittels den Überwachungsmodulen erfassten Sensorsignale können auf verschiedenen Ebenen verarbeitet werden. Die Software und Hardware, zur Auswertung der Sensorsignale kann lokal in den Überwachungsmodulen oder zentral im Zentralcomputer oder verteilt einerseits in den Überwachungsmodulen und andererseits im Zentralcomputer vorgesehen sein. Vorzugsweise werden so viele Informationen, wie möglich, lokal in den Überwachungsmodulen gewonnen, sodass anstelle grosser Datenmengen für die Sensorsignale extrahierte Informationen übertragen werden können, die gegebenenfalls nur wenige Bytes umfassen. Beispielsweise kann aus einem Sprachsignal ein Wort oder Satz extrahiert werden, welcher für das Eindringen von Personen relevant sein kann.

Vorzugsweise werden Primär-Informationen, die unmittelbar für die Erkennung des Eindringens von Personen wichtig sind, sowie Sekundär-Informationen, die für die Beweisführung im Schadensfall erforderlich sind, ermittelt. Sekundär-Informationen, die nur für die spätere Beweisführung benötigt werden, können daher lokal gesammelt und später gewonnen werden.

Für das Auslösen eines Alarms kann die Identifikation einer eindringenden Person hilfreich sein. Diese Identifikationsdaten können Primär-Informationen oder Sekundär-Informationen sein. Falls die weiteren Informationen zur Auslösung eines Alarms ausreichen, muss die Identifikation nicht online erfolgen. Falls ein Schwellwert zur Auslösung des Alarms hingegen noch nicht überschritten ist, können die Sensorsignale zur Ermittlung weiter Primär-Informationen weiter überprüft werden, um zusätzliche Entscheidungsgrundlagen zu erhalten. Falls das mittels der Sensoren registrierte Sprachmuster mit einem für eine Person bereits registrierten Sprachmuster übereinstimmt, kann der Alarm in der Folge ausgelöst werden. Bei der Aufzeichnung von Daten sind selbstverständlich rechtliche Rahmenbedingungen zu beachten.

Die Verarbeitung der Sensorsignale kann lokal oder zentral, in den Überwachungsmodulen oder im Zentralcomputer, oder zeitlich unterschiedlich, online oder verzögert z.B. im Zentralcomputer, erfolgen.

Dazu sind die Überwachungsmodule mit Computermodulen, vorzugsweise Signalprozessoren, Speichermodulen und einem lokalen Überwachungsprogramm ausgerüstet. Der Zentralcomputer verfügt ebenfalls über die erforderliche Rechenkapazität und Speicherkapazität, vorzugsweise ebenfalls über wenigstens einen Signalprozessor. Die Signalmuster können in einem Speicher des Zentralcomputers oder in einer zentralen Datenbank, die weiteren Überwachungssystemen zur Verfügung steht, gespeichert werden.

Die erfassten Sensorsignale können in einer ersten Stufe gefiltert werden, z.B. um Hintergrundsignale auszublenden.

In der Folge können die Sensorsignale mit Signalmustern verglichen werden, um Informationen bezüglich der Ereignisse zu gewinnen, welche die Sensorsignale verursacht haben. Aus akustischen Signalen können Stimmen, Worte, Sprachen, Spracheigenheiten, oder Werkzeug-typische Geräusche ermittelt werden. Beispielsweise werden Stimmen ermittelt, die einer Person oder zumindest dem Geschlecht einer Person zugeordnet werden können. Die Ermittlung von gesprochenen Worten kann für das Vokabular eindringender Personen typisch sein. Geräusche von geschüttelten und betätigten Spraydosen können ebenfalls gut identifiziert werden. Mittels Gassensoren kann versprühtes Gas detektiert werden. Mittels Beschleunigungssensoren können Erschütterungen erfasst werden, die von den eindringenden Personen verursacht werden.

Die Überwachungsmodule werden mit wenigstens einem Sensor ausgerüstet, der zur Erfassung von Emissionen geeignet ist, die beim Eindringen von Personen und bei Schädigungshandlungen typischerweise auftreten. Vorzugsweise werden verschiedene physikalische, optische, mechanische, elektronische, und chemische Sensoren in Kombination eingesetzt.

Durch Analyse der festgestellten Ereignisse, wie die Feststellung der Anzahl eindringender Personen, die zumindest teilweise Identifikation einer oder mehrerer Stimmen, die Identifikation wenigstens eines gesprochenen Worts oder die Identifikation von Werkzeuggeräuschen kann hinreichend sein für die Auslösung eines Alarms. Möglicherweise genügt die Detektion nur weniger dieser Ereignisse, die für die Feststellung des Eindringens typischerweise eine unterschiedliche Relevanz aufweisen.

In einer weiteren Stufe werden ermittelte Ereignisse anhand von Positionsdaten und Zeitdaten in Kontext zueinander gestellt, sodass der Ereignisablauf ermittelt werden kann. Die von den Überwachungsmodulen abgegebenen lokalen Sensorsignale oder Informationen werden vorzugsweise miteinander verknüpft, um Ereignisabläufe zu ermitteln.

Beispielsweise werden Bewegungen von zwei Personen registriert, bei denen es sich aufgrund von unterschiedlichen Stimmlagen um eine Frau und einen Mann handelt. Der Mann bewegt sich von einer ersten zu einer zweiten Position auf den Schutzgegenstand zu und hantiert dort mit einem Werkzeug, welches als Spraydose identifiziert wird. Die Frau verharrt während dieser Zeit an einer dritten Position und führt ein kurzes Gespräch, in dem die Worte »Farbe« und »Spraydose« erkannt werden.

Das erfindungsgemässe Verfahren erlaubt es daher Ereignisabläufe und Ereignisdetails zu ermitteln, wie die Anzahl der Personen, das Geschlecht der Personen, das Bewegungsverhalten der Personen, der Bewegungsverlauf der Personen, die Sprache der Personen, Schlüsselworte der Personen, physikalische Eigenschaften der Personen, mitgeführte Werkzeuge oder Geräte und Telekommunikationsmittel. Die zur Detektion von Ereignissen vorgesehenen Mustersignale passieren auf Erfahrungswerten, die über längere Betriebspensionen, z.B. während Jahren, gesammelt werden. Gesammelte Erfahrungswerte werden Lernen und Training permanent optimiert, ergänzt und vorzugsweise an die überwachte Anlage angepasst. Das Überwachungssystem kann auch selbst lernend sein und neu registrierte Muster automatisch in die Datenbank aufnehmen; dies z.B. gestützt auf erkannte Ereignismuster aus vorzugsweise langjähriger Erfahrung.

Die Ermittlung des Ereignisablaufs kann für den sofortigen Einsatz des Sicherungspersonals oder auch für die spätere Beweisführung im Strafprozess besonders wichtig sein.

Dem Sicherungspersonal kann z.B. mitgeteilt werden, wie viele Personen eingedrungen sind und aus welcher Richtung eingedrungen sind. Möglicherweise können zu den einzelnen Personen weitere Angaben gemacht werden. Das Sicherungspersonal kann daher den Zugangsweg absichern, der typischerweise auch den Rückzugsweg bildet. Ferner kann das Einsatzkommando entsprechend dimensioniert und ausgerüstet werden.

Für den Nachweis des unberechtigten Eindringens können den einzelnen Personen anhand des ermittelten Ereignisablaufs einzelne Handlungen zugeordnet werden. Möglicherweise hat sich nur eine identifizierte Person an dem Ort aufgehalten, an dem ein bestimmter Schaden aufgetreten ist. Möglicherweise waren mehrere Personen beteiligt, denen anhand des erfindungsgemässen Verfahrens einzelne Handlungen schlüssig zugeordnet werden können.

Zur Auswertung der Sensorsignale werden im Zentralcomputer oder in den Computermodulen vorzugsweise Frequenzmuster und/oder Stimmmuster und/oder Wortmuster ermittelt und mit gespeicherten Mustersignalen oder Musterinformationen verglichen.

Beispielsweise werden durch eine Fourier-Transformation der Sensorsignale Frequenzmuster ermittelt, die mit zuvor gespeicherten Frequenzmustern, beispielsweise Frequenzmustern des Schüttelns einer Spraydose, Frequenzmustern von Spraygeräuschen, Frequenzmustern von Stimmen, verglichen werden, um die entsprechenden Ereignisse zu identifizieren.

Vorzugsweise werden die lokalen Sensorsignale je lokal in den Überwachungsmodulen oder zentral im Zentralcomputer analysiert und nach Vergleich mit Mustersignalen oder Musterinformationen als Ereignisse je einer Ereignisklasse zugeordnet. Den einzelnen Ereignisklassen werden in der Folge Regeln zugeordnet, gemäss denen die registrierten Ereignisse in jeder Ereignisklasse zu behandeln sind. Ein Spraygeräusch ist gemäss den Regeln z.B. mit höherer Priorität zu behandeln, als ein Trittgeräusch.

Beispielsweise wird den Ereignisklassen je ein Gewichtungsfaktor, der in Abhängigkeit der Relevanz für das Eindringen von Personen gewählt ist, zugeordnet. Der Entscheid zum Vorliegen eines Eindringens von Personen wird in der Folge unter Berücksichtigung der zugeordneten Gewichtungsfaktoren gefällt, wobei für die Anzahl der gewichteten Ereignisse vorzugsweise ein Mittelwert gebildet wird, der mit einem Schwellwert verglichen wird.

Alternativ oder zusätzlich zur Zuordnung von Gewichtungsfaktoren wird den Ereignisklassen vorzugsweise je ein Unsicherheitsfaktor, der das Mass der Übereinstimmung der Sensorsignale oder Informationen mit den Mustersignalen oder Musterinformationen repräsentiert, zugeordnet. Der Entscheid zum Vorliegen eines Eindringens von Personen wird in der Folge unter Berücksichtigung der zugeordneten Unsicherheitsfaktoren gefällt, wobei für die Anzahl der mit den Unsicherheitsfaktoren verrechneten und gegebenenfalls gewichteten Ereignisse vorzugsweise ein Mittelwert gebildet wird, der mit dem Schwellwert verglichen wird.

Durch die Zuordnung von Gewichtungsfaktoren kann die Relevanz der Ereignisse beurteilt werden, sodass ein Entscheid zum Vorliegen eines Eindringens mit hoher Zuverlässigkeit gefällt werden kann und Fehlalarme weitgehend vermieden werden können. Durch Berücksichtigung des Masses der Übereinstimmung der gemessenen Sensorsignale mit Signalmustern, kann das Risiko eines Fehlalarms einerseits weiter reduziert werden. Andererseits werden nicht vollständig befriedigende Sensorsignale nicht verworfen, sondern ebenfalls berücksichtigt, um das Risiko zu vermeiden, dass ein Eindringen von Personen nicht erfasst wird.

Durch die Erfassung der Wahrscheinlichkeiten der Ereignisse kann dem Alarmreport auch eine Wahrscheinlichkeit zugeordnet werden, welche einer Einsatzzentrale bei Vorliegen mehrerer Alarmreporte erlaubt, Prioritäten zu setzen und die Einsätze entsprechend zu planen. Der Informationsgehalt des Alarmreports gibt Aufschluss über die Vorgänge und die beteiligten Personen, weshalb Sicherungspersonal entsprechend eingesetzt werden kann. Enthält der Alarmreporte die Mitteilung, dass an der Aktion mehrere Männer beteiligt sind, so kann das Sicherungspersonal entsprechend verstärkt werden.

Die Vernetzung der Überwachungsmodule untereinander oder mit dem Zentralcomputer kann durch verschiedene Kommunikationstechnologien oder Netzwerktechnologien erfolgen.

Möglicherweise können auch mehrere Kommunikationsstrukturen einander überlagert werden, sodass ein redundantes Kommunikationssystem resultiert. Vorzugsweise wird vorgesehen, dass die Überwachungsmodule über bidirektionale Kommunikationskanäle miteinander verbunden sind und/oder dass der Zentralcomputer je über einen unidirektionalen oder bidirektionalen Kommunikationskanal mit wenigstens einem der Überwachungsmodule verbunden ist.

In vorzugsweisen Ausgestaltungen sind die Überwachungsmodule in der Lage, als Relaisstationen zu dienen, um Nachrichten von anderen Überwachungsmodulen an den Zentralrechner weiterzuleiten.

Die von jedem der Überwachungsmodule abgegebenen lokalen Sensorsignale oder Informationen können vorzugsweise direkt von jedem der Überwachungsmodul oder indirekt über eines der Überwachungsmodule zum Zentralcomputer übertragen werden.

Vorzugsweise kann jedes der Überwachungsmodule durch wenigstens eines der benachbarten Überwachungsmodule oder durch den Zentralcomputer überwacht werden. Der Ausfall eines Überwachungsmoduls wird durch den Zentralcomputer registriert, sodass eine Fehlinterpretation hinsichtlich des Ausbleibens von Sensorsignalen von diesem Überwachungsmodul verhindert wird und gegebenenfalls anderweitig kompensiert wird.

Vorzugsweise ist das Überwachungssystem in Abhängigkeit der im Betriebszustand befindlichen Überwachungsmodule jeweils konfigurierbar oder rekonfigurierbar. Dabei können Inbetriebnahme-Routinen vorgesehen werden, bei denen Statusmeldungen der Überwachungsmodule, die z.B. die Identifikation, die Position, die Ausrüstung und gegebenenfalls weitere Eigenschaften und Zustände jedes Überwachungsmoduls enthalten, zum Zentralcomputer gesandt werden.

In Zentralcomputer ist vorzugsweise ein Programmodul vorgesehen, das in der Lage ist, die überwachte Anlage, die installierten Überwachungsmodule und deren Zustände grafisch darzustellen.

Nachfolgend wird die Erfindung anhand von Zeichnungen näher erläutert. Dabei zeigt:
- Fig. 1: eine Eisenbahnanlage 1000, in die Personen A, B rechtswidrig eingedrungen sind, und ein Überwachungssystem 100 mit mehreren Überwachungsmodulen 1A, ..., 1E, mittels denen die Emissionen der Personen A, B erfasst werden, und mit einem Zentralcomputer 101, in dem die von den Überwachungsmodulen 1A, ..., 1E übermittelten und gegebenenfalls vorverarbeiteten Signale und Informationen ausgewertet werden;
- Fig. 2a: eines der Überwachungsmodule 1 von Fig. 1 in räumlicher Darstellung;
- Fig. 2b: das Überwachungsmodul 1 von Fig. 2a in schematischer Darstellung;
- Fig. 3: Funktionsmodule 191, 192, 193, 194, 195 die zumindest teilweise in einem lokalen Überwachungsprogramm 19 der Überwachungsmodule 1A, ..., 1E oder teilweise oder vollständig in einem zentralen Überwachungsprogramm 109 des Zentralcomputers 101 vorgesehen sind; und
- Fig. 4: Funktionsmodule 193, 194, 195 gemäss Fig. 3, die vorzugsweise im zentralen Überwachungsprogramm 109 des Zentralcomputers 101 gesehen sind.

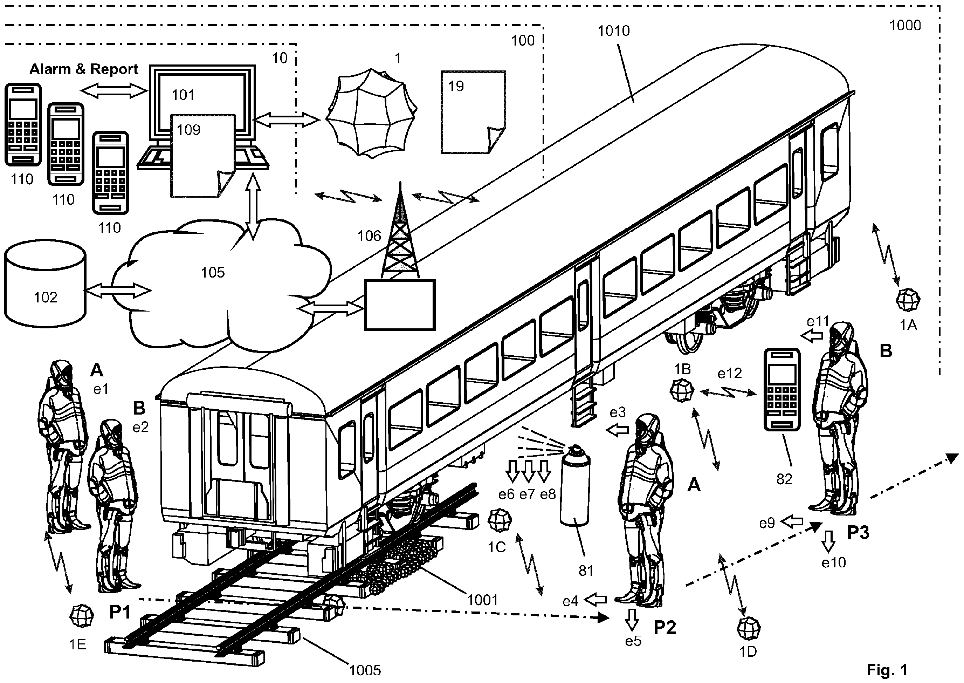

Fig. 1 zeigt eine Eisenbahnanlage 1000 mit einem auf einen Geleise 1005 abgestellten Eisenbahnwagen 1010. Zum Schutz der Eisenbahnanlage 1000 ist ein Überwachungssystem 100 vorgesehen, welches eine Überwachungszentrale 10 mit einem Zentralcomputer 101 sowie mehrere Überwachungsmodule 1A, ..., 1E aufweist, die voneinander beabstandet an kritischen Positionen der Anlage 1000 angeordnet sind.

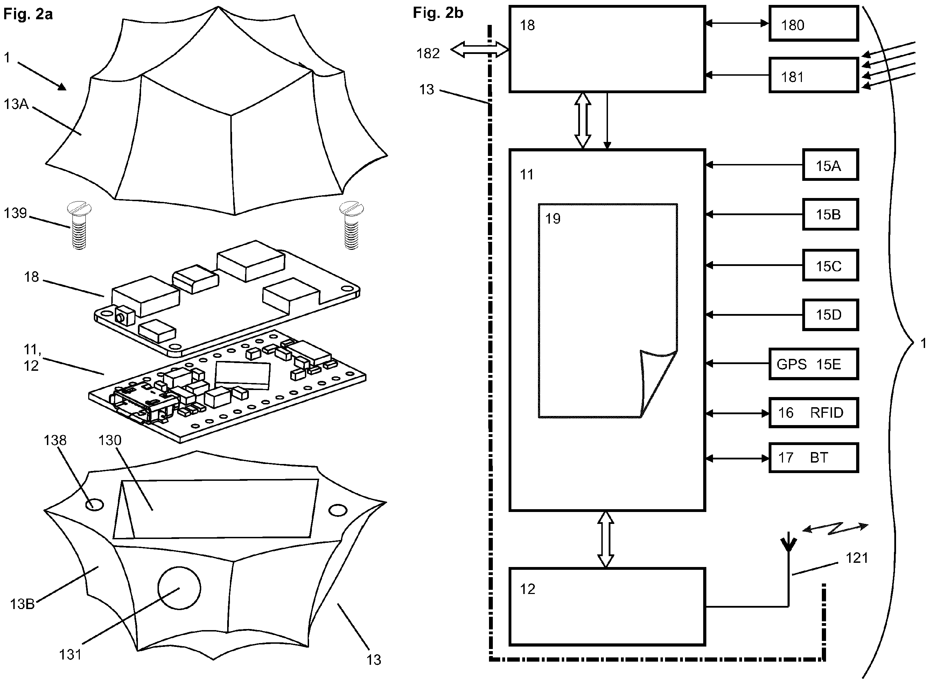

Die in Fig. 1, Fig. 2a und Fig. 2b exemplarisch gezeigten Überwachungsmodule 1A, ..., 1E sind mit Sensoren 15 ausgerüstet, mit denen vorzugsweise alle Emissionen erfasst werden können, die beim Eindringen von Personen in die Anlage 1000 auftreten können. Die Überwachungsmodule 1A, ..., 1E sind mit elektronischen Baugruppen ausgerüstet, die es erlauben, Sensorsignale gegebenenfalls zu digitalisieren und zu bearbeiten und vorzugsweise auch zumindest teilweise auszuwerten. Vorgesehen sind ein Computermodul 11 und ein Kommunikationsmodul 12, die auf einer gemeinsamen elektronischen Schaltplatte PCB oder auf getrennten Schaltplatten PCBs angeordnet und miteinander verbunden sind. Zur Energieversorgung sind ein vorzugsweise intelligentes Stromversorgungsmodul 18 und ein Akkumulator 180 vorgesehen. Die elektrischen und elektronischen Bauteile sind derart ausgelegt und werden derart betrieben, dass nur ein Minimum an elektrischer Energie benötigt wird.

Das Überwachungsmodul 1 umfasst vorzugsweise einen Stromgenerator 181, welcher z.B. Sonnenenergie oder thermische Energie in elektrische Energie wandelt, die vom Stromversorgungsmodul 18 im Akkumulator 180 gespeichert wird. Alternativ kann der Akkumulator 180 über den Anschluss 182 geladen werden.

Im Computermodul 11 ist nebst den notwendigen Betriebsprogrammen das Überwachungsprogramm 19 implementiert, mittels dessen die Signale von den zugeschalteten Sensoren 15, z.B. einem akustischen Sensor 15A, einem mechanischen Sensor, z.B. einem Beschleunigungssensor 15B, einem thermischen Sensor 15C, einem Gassensor 15D, einem GPS-Modul 15E, gegebenenfalls miteinander verknüpft, bearbeitet und gegebenenfalls ausgewertet werden.

In dieser exemplarischen Ausgestaltung ist ein RFID-Modul vorgesehen, mittels dessen das Überwachungsmodul 1 identifiziert und lokalisiert werden kann. Exemplarisch ist weiterhin ein Bluetooth-Modul vorgesehen, welches den Überwachungsmodulen 1A, ..., 1E erlaubt, ein ad-hoc Netzwerk aufzubauen, wie dies z.B. in der US20020120750A1 beschrieben ist. Das Bluetooth-System kann dabei parallel zu anderen Kommunikationssystemen betrieben werden. Vorzugsweise kann sich das Bluetooth-System selbst konfigurieren und gegebenenfalls eines der Überwachungsmodule 1A, ..., 1E als Relaisstation konfigurieren, sodass auch bei grösseren Anlagen und Arealen die Kommunikation zwischen den Überwachungsmodulen 1A, ..., 1E sichergestellt ist.

Überwachungsmodule 1A, ..., 1E, wie sie in Fig. 2a und 2b illustriert sind, können in vorzugsweisen Ausgestaltungen somit autonom über eine unbegrenzte Zeit arbeiten und sich selbst konfigurieren und automatisch die Bereitschaft an die Überwachungszentrale 10 melden. Der Zentralcomputer 101 ist vorzugsweise in der Lage, die Überwachungsmodule 1A, ..., 1E zu konfigurieren, abzufragen, neu zu programmieren oder in einen Schlafmodus zu versetzen.

Das Gehäuse 13 der Überwachungsmodule 1A, ..., 1E, welches zwei Schalen 13A, 13B umfasst, hat die Form eines Steins vorzugsweise mit den Dimensionen eines Schottersteins, der im Gleisbett oder auch in einer benachbarten Wiese unauffällig platziert werden kann und in der Folge nicht mehr auffällt. In wenigstens einer der beiden Schalen 13A, 13B ist eine Ausnehmung 130 vorgesehen, in der die elektronischen Baugruppen 11, 12, 18 aufgenommen werden. Die beiden Schalen 13A, 13B sind durch Schrauben 139 miteinander verbindbar, die durch Bohrungen der ersten Schale 13A hindurch führbar und in Gewindebohrungen 138 in der zweiten Schale 13B eindrehbar sind. Die beiden Schalen 13A, 13B sind vorzugsweise mittels wenigstens eines Dichtungsrings (nicht gezeigt) abgedichtet, sodass keine Flüssigkeit zu den elektronischen Modulen 11, 12, 18 gelangen kann. Weiterhin ist das Gehäuse 13 hinsichtlich der Oberflächenbeschaffenheit und Bemalung an die imitierten Objekte angepasst.

Zur Aufnahme der Sensoren 15 sind vorzugsweise Sensorkammern mit Auslassöffnungen 131, gegebenenfalls mit einem Lochmuster, vorgesehen. Die Sensorkammern sind gegenüber der Ausnehmung 130 vorzugsweise dicht abgeschlossen. Beispielsweise ist ein mit Dichtstoff abgeschlossener Kanal vorgesehen, durch den die Sensorkabel hindurch geführt sind.

Die einzelnen Überwachungsmodule 1A, ..., 1E sind mit Kommunikationsmodulen 12 (siehe Fig. 2b) ausgerüstet und kommunizieren über eine Antenne 121 mit einer Funkstation 106 und über ein Netzwerk bzw. eine Cloud 105 mit dem Zentralcomputer 101 (siehe Fig. 1). Die Funkstation 106 arbeitet als Gateway zwischen den Überwachungsmodulen 1A, ..., 1E und dem Zentralcomputer 101. Die Kommunikationsmodule 12 umfassen wenigstens ein Sendemodul, mittels dessen Signale und Daten vorzugsweise drahtlos zur Funkstation 106 bzw. zum Zentralcomputer 101 übertragbar sind. Vorzugsweise sind die Kommunikationsmodule 12 zur bidirektionalen Übertragung von Signalen und/oder Daten vorgesehen und zusätzlich mit einer Empfangseinheit ausgerüstet.

Grundsätzlich können beliebige Funknetze verwendet werden, wie sie z.B. in https://de.wikipedia.org/wiki/Funknetz beschrieben sind. Ebenso können beliebige Kommunikationsprotokolle oder Netzwerkprotokolle, wie sie z.B. in https://de.wikipedia.org/wiki/Kommunikationsprotokoll oder z.B. in https://de.wikipedia.org/wiki/Netzwerkprotokoll beschrieben sind, eingesetzt werden.

Vorzugsweise wird ein Long Range Wide Area Network (LoRaWAN) bzw. ein Low-Power-Wireless-Netzprotokoll zur Kommunikation zwischen den Überwachungsmodulen 1A, ..., 1E und dem Zentralcomputer 101 verwendet. LoRaWAN ist asymmetrisch und auf Energieeffizienz ausgerichtet für Reichweiten über 10 km für die Uplink-Kommunikation, also das Senden von den Überwachungsmodulen 1A, ..., 1E zum Zentralcomputer 101. Die Datenübertragungsrate reicht von 292 bit/s bis 50 kbit/s (siehe https://de.wikipedia.org/wiki/Long Range Wide Area Network). Es sind zusätzlich auch weitere Netzwerkarchitekturen und Kommunikationsprotokolle einsetzbar, wie das genannte Bluetooth-System.

Die Position der Überwachungsmodule 1A, ..., 1E wird bei der Installation ermittelt oder wird von den Überwachungsmodulen 1A, ..., 1E anhand des Lokalisierungsmoduls bzw. GPS-Moduls 15E ermittelt und zusammen mit der eindeutigen Identifikationsnummer der Überwachungsmodule 1A, ..., 1E an den Zentralcomputer 101 gemeldet. Im Zentralcomputer 101 ist daher die Konfiguration des Überwachungssystems 100 mit allen relevanten Daten, einschliesslich der Positionsdaten und Identifikationsdaten der Überwachungsmodule 1A, ..., 1E, stets bekannt. Von den Überwachungsmodulen 1A, ..., 1E detektierte Ereignisse können daher stets mit hoher Genauigkeit einer Position zugeordnet werden.

Nebst Betriebsprogrammen sind in den Überwachungsmodulen 1A, ..., 1E lokale Überwachungsprogramme 19 und im Zentralcomputer 101 ein zentrales Überwachungsprogramm 109 implementiert. Überwachungsfunktionen können wahlweise verteilt in den lokalen Überwachungsprogrammen 19 oder im zentralen Überwachungsprogramm 109 realisiert sein. Durch das zentrale Überwachungsprogramm 109 erfolgt typischerweise die Auswertung aller von den Überwachungsmodulen 1A, ..., 1E gelieferten Signale und Informationen. Vorzugsweise gelangt das Subsidiaritätsprinzip zur Anwendung, gemäss dem nach Möglichkeit die lokal vorhandenen Ressourcen genutzt werden. Zur Entlastung der Überwachungsmodule 1A, ..., 1E oder zur präziseren Auswertung kann hingegen auch eine erhöhte Zentralisierung vorgesehen sein, sodass im Extremfall von den Überwachungsmodulen 1A, ..., 1E weitgehend unbearbeitete Sensorsignale 101 zum Zentralcomputer 101 übertragen und erst dort bearbeitet werden. Da auf dem Markt hingegen bereits sehr leistungsfähige Prozessorsysteme z.B. der Firma SparkFun Electronics https://www.sparkfun.com/ mit geringen Abmessungen erhältlich sind, können Überwachungsmodule 1A, ..., 1E mit intelligenten Funktionen bis hin zur Spracherkennung realisiert werden. Mittels des Moduls »Sparkfun Edge - Tensorflow« können komplexe Funktionen peripher bzw. "at the edge" durchgeführt werden. So können mittels dieses Moduls Worte aus Gesprächen bzw. aus lokalen Sensorsignalen extrahiert und als lokale Informationen zur Überwachungszentrale 10 übermittelt werden. Auf diese Weise kann das zur Überwachungszentrale 10 transferierte Datenvolumen wesentlich reduziert werden.

Die Aufteilung von Funktionen kann fest oder dynamisch gewählt werden. Beispielsweise wird ein zur Spracherkennung geeignetes Computermodul 11 verwendet, dessen Spracherkennungsfunktionen zugeschaltet oder abgeschaltet werden kann. Vorzugsweise wird die Spracherkennungsfunktionen genutzt, um Schlüsselworte peripher zu erfassen. Eine weiterführende Auswertung der lokalen Sensorsignale kann hingegen zusätzlich vom Zentralcomputer 101 durchgeführt werden, in dem ein leistungsfähigeres Spracherkennungsprogramm implementiert ist, wie dies z.B. in der US7016842B2 beschrieben ist. Die periphere Spracherkennung dient dabei primär der Detektion des rechtswidrigen Eindringens von Personen, während die zentrale Spracherkennung der Beweissicherung dient.

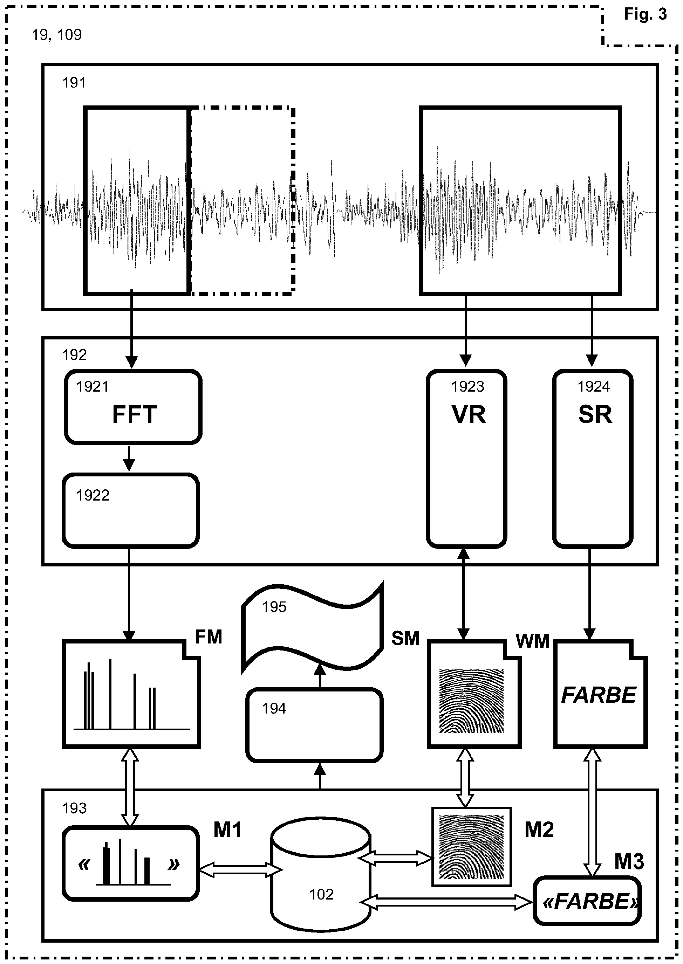

Fig. 3 zeigt Funktionsmodule 191, 192, 193, 194, 195 die im lokalen Überwachungsprogramm 19 der Überwachungsmodule 1A, ..., 1E oder im zentralen Überwachungsprogramm 109 des Zentralcomputers 101 vorgesehen sind.

Das Funktionsmodul 191 ist ein Signalbearbeitungsmodul, welches Sensorsignale, im vorliegenden Fall akustische Sensorsignale vorbearbeitet und gemäss einem Protokoll dem nachgeschalteten Signalauswertungsmodul 192 gegebenenfalls abschnittsweise und gefiltert zur Verfügung stellt. Sprachsignale, welche an die Funktionsmodule 1923 und 1924 geliefert werden, werden vorzugsweise derart gefiltert, dass ausserhalb des Frequenzbereichs der Sprachsignale vorhandene Signalanteile unterdrückt werden. Dem Funktionsmodul 1921 werden beispielsweise Signalsequenzen einer bestimmten Länge zur Auswertung übertragen. Die Länge der Signalsequenz entspricht z.B. der Länge eines Ereignisses. Vorzugsweise kann das Signalbearbeitungsmodul 191 Signalsequenzen unterschiedlicher Ereignisse voneinander trennen und getrennt an das Signalauswertungsmodul 192 übermitteln. Ein Signalgemisch kann somit in Signalanteile getrennt und/oder gesamthaft an das Signalauswertungsmodul 192 übertragen werden.

Das Signalauswertungsmodul 192 umfasst das Funktionsmodul 1921, mittels dessen durch Fourier-Transformation das Frequenzspektrum FM der empfangenen Signale bzw. des aufgetretenen Ereignisses ermittelt werden kann. Für alle akustischen Ereignisse können somit die zugehörigen Frequenzmuster FM ermittelt werden. Durch Vergleich mit in der Datenbank 102 gespeicherten Frequenzmustern, die für relevante Ereignisse registriert wurden, können in der überwachten Anlage 1000 aufgetretene Ereignisse identifiziert bzw. einer Handlung zugeordnet werden. Vorzugsweise werden Frequenzmuster für kritische und unkritische Ereignisse in der Datenbank 102 abgelegt.

Vorzugsweise werden für Ereignisse, die typischerweise innerhalb der überwachten Anlage 1000 auftreten, Frequenzmuster registriert, sodass Fehlalarme vermieden werden können. Falls z.B. regelmässig Flugzeuge die Anlage 1000überfliegen oder in einer benachbarten Fabrik regelmässig eine Sirene betätigt wird, können diese unkritischen Ereignisse anhand zuvor registrierter Referenzmuster identifiziert werden. Eine Übereinstimmung mit kritischen Frequenzmustern, wie Geräuschen einer geschüttelten Spraydose, Sprechgeräuschen, Schlaggeräuschen, Laufgeräuschen, tieffrequenten Vibrationen, verweist hingegen auf das Eindringen von Personen.

Das Funktionsmodul 1923 dient der Stimmerkennung (Voice Recognition) und erlaubt die Identifikation bestimmter Personen. Sprachsignale sind typisch für die betreffenden Personen und somit biometrische Signale, was mit dem Fingerabdruck in Fig. 3 symbolisiert wird. Möglicherweise kann eine Person durch Übereinstimmung mit einem zuvor gespeicherten Stimmmuster identifiziert werden. Möglich ist ferner die Identifikation des Geschlechts der Person, wozu beispielsweise das Frequenzmuster FM hinzugezogen wird welches tiefere Frequenzanteile für männliche Personen enthält.

Das Funktionsmodul 1924 erlaubt die Spracherkennung zumindest eines oder mehrerer kritischer Begriffe. Beispielsweise wird ein typisches Wort, wie »FARBE«, erkannt, welches auf Graffiti-Aktivitäten schliessen lässt.

Die Kombination der Stimmerkennung und der Spracherkennung erlaubt eine besonders präzise Identifikation der betreffenden Person. Die Identifikation des Wortes »FARBE« ist daher für die Detektion des Eindringens und später für die Beweisführung im Strafprozess besonders relevant. Verfahren zur Stimmerkennung bzw. Authentisierung einer Person hinsichtlich ihrer Stimme sowie Verfahren zur Spracherkennung sind in der US20160372116A1 beschrieben.

Das Funktionsmodul 193 ist ein Komparator, welcher zuvor gespeicherte Muster M1, M2, M3, ..., Mx aus der Datenbank 102 lädt und mit den vom Signalauswertungsmodul 192 ermittelten Mustern, dem Frequenzmuster FM, dem Stimmmuster SM und dem Wortmuster WM vergleicht (FM <--> M1, SM <--> M2, WM <--> M3) und vorzugsweise für jeden Vergleich bzw. für jedes detektierte Ereignis E1, E2, ..., En das Mass der Übereinstimmung %1, %2, ... , %n festlegt.

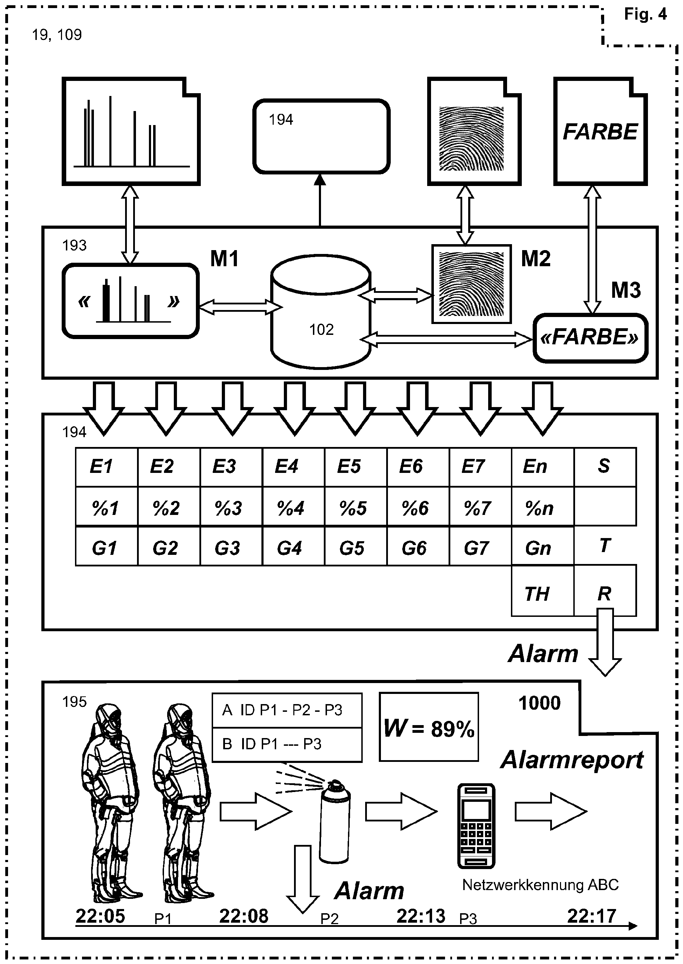

Fig. 3 zeigt ferner ein Auswertemodul 194 und ein Reporting Modul 195, die in Fig. 4 näher dargestellt und typischerweise im zentralen Überwachungsprogramm 109 des Zentralcomputers 101 implementiert sind. Im Auswertemodul 194 werden die ermittelten Ereignisse klassifiziert und entsprechend der Klassifizierung und vorzugsweise der ermittelten Ereigniswahrscheinlichkeit %1, ..., %n und vorzugsweise entsprechend zugeordneten Gewichtungsfaktoren G1, ... Gn ausgewertet. Für die Anzahl S der mit den Unsicherheitsfaktoren %1, %2, ..., %n verrechneten und gegebenenfalls gewichteten Ereignisse E1, E2, ..., En wird vorzugsweise ein Mittelwert T gebildet, der mit einem Schwellwert TH verglichen wird. Entsprechend dem Resultat R, welches oberhalb oder unterhalb des Schwellenwerts TH liegt, wird in der Folge ein Alarm ausgelöst oder nicht.

Die Ereignisklassen E1, E2 betreffen z.B. unkritische Ereignisse und sind daher mit einem Gewichtungsfaktor nahe Null versehen. Ereignisse, die das Sprayen das Schütteln von Spraydosen oder einschlägige Kennwort betreffen können hingegen mit einem Gewichtungsfaktor >> 1 versehen werden.

Mit Auslösung des Alarms für die Anlage 1000 kann vom Reporting Modul 195 ein Alarmreport generiert werden, in dem die Ereignisse mit ihrem Ablauf dokumentiert sind.

Beispielsweise wurde das Eindringen von zwei Personen A, B um 22:05 Uhr registriert. Durch Sprachanalyse konnte festgestellt werden, dass Person A ein Mann ist und mit einer Wahrscheinlichkeit von 85 % Herrn XY entspricht. Person B ist eine Frau, die in der Datenbank 102 noch nicht registriert ist. Für beide Personen A, B wurden die Bewegungen registriert. Person A bewegte sich von Position P1 zu Position P2 und weiter zu Position P3. Person B bewegte sich von Position P1 zu Position P3. Um 22:08 wurde von Person A eine Spraydose betätigt. Person B benutzte um 22:13 ein Mobiltelefon mit der Netzwerkerkennung ABC. Um 22:10 Uhr wurde der Alarm ausgelöst. Um 22:17 wurden die Personen A, B angehalten.

Die in der Anlage 1000 tatsächlichen registrierten Ereignisse e1, ..., e11, die dem Ereignisablauf im Alarmreport weitgehend entsprechen sind in Fig. 1 abgebildet. Um 22:08 Uhr werden zwei unterschiedliche Stimmen (Ereignisse e1, e2) vom Überwachungsmodul 1E an der Position P1 registriert. Die Stimmanalyse ergibt, dass A ein Mann und B eine Frau ist. Möglicherweise werden auch Trittgeräusche erfasst, die in der Intensität dieser Feststellung sprechen. An Position P2 werden Stimmgeräusche, Schrittgeräusche und Erschütterungen (Ereignisse e3, e4, e5) der Person A erfasst. Aus den Stimmgeräuschen wird ein Schlüsselwort extrahiert. Die Informationen erlauben die Identifikation der Person A. Weiter werden vom Überwachungsmodul 1C Schüttelgeräusche einer Spraydose 81, Spraygeräusche und Gase detektiert (Ereignisse e6, e7, e8). Die Ereignisse e6, e7, e8 sind mit hohen Gewichtungsfaktoren verbunden, weshalb spätestens zu diesem Zeitpunkt ein Alarm ausgelöst wird und das Sicherungspersonal in entsprechender Stärke entsandt wird. Ein Alarm mit dem soweit erstellten Alarmreport wird zu den Endgeräten 110 des Sicherungspersonals übermittelt.

Auch nach Auslösung des Alarms werden die Ereignisse in der überwachten Anlage 1000 weiter registriert. Vom Überwachungsmodul 1B werden Trittgeräusche und Erschütterungen sowie die Stimme der Person B an der Position P3 registriert (Ereignisse e9, e10, e11). Weiterhin werden Wireless-Signale eines Mobilfunkgeräts 82 festgestellt (Ereignis e12), welches offenbar von Person B benutzt wird. Im abschliessenden Report kann ferner das Eintreffen des Sicherungspersonals um 22:17 registriert werden. Der Alarmreport mit dem registrierten Ereignisablauf, insbesondere auch dem Bewegungsablauf der Personen A, B kann von der Einsatzleitung vorteilhaft für die Einsatzplanung des Sicherungspersonals verwendet werden.

## Patentansprüche

1. Verfahren zur Überwachung einer Anlage (1000) mit zu schützenden Gegenständen (1020), insbesondere einer Eisenbahnanlage mit Eisenbahnwagen (1020), hinsichtlich des Eindringens von Personen, mit einem Überwachungssystem (100) umfassend wenigstens einen Sensor (15) zur Erfassung von Emissionen der Personen oder von Geräten der Personen, wie Geräuschen, Sprache, Gasen, Strahlung und Erschütterungen, und zur Abgabe entsprechender Sensorsignale sowie wenigstens eine Computereinheit (11; 101) mit einem implementierten Überwachungsprogramm (19, 109), zur Verarbeitung der Sensorsignale und zur Ermittlung von Informationen zu den eindringenden Personen,
**dadurch gekennzeichnet,**
**dass** in einer Überwachungszentrale (10) wenigstens ein Zentralcomputer (101) mit einer Speichereinheit (102) vorgesehen ist, in der Mustersignale oder Musterinformationen (M) gespeichert werden, die für das Eindringen der Personen typische und gegebenenfalls für die Anlage (1000) typische Ereignisse (E1, E2, ..., En) repräsentieren, und
**dass** mehrere Überwachungsmodule (1, 1A, 1B) vorgesehen sind,
- die innerhalb der Anlage (1000) voneinander beabstandet angeordnet werden,
- die je wenigstens einen Sensor (15) aufweisen, mit dem Emissionen erfasst werden,
- die je wenigstens ein Computermodul (11) mit einem implementierten lokalen Überwachungsprogramm (19) aufweisen, mit dem lokale Sensorsignale verarbeitet und gegebenenfalls entsprechende lokale Informationen ermittelt werden, und
- die je wenigstens eine Kommunikationseinheit (12) aufweisen, mittels der die lokalen Sensorsignale oder Informationen direkt oder indirekt zum Zentralcomputer (101) übertragen werden, und
**dass** im Zentralcomputer (101) ein zentrales Überwachungsprogramm (109) implementiert ist, welches die von den Überwachungsmodulen (1A, 1B) abgegebenen lokalen Sensorsignale oder Informationen direkt oder nach Bearbeitung mit den in der Speichereinheit (102) gespeicherten Mustersignalen oder Musterinformationen (M) vergleicht, um das Eindringen der Personen zu detektieren und zu melden.

2. Verfahren nach Anspruch 1, **dadurch gekennzeichnet, dass** wenigstens eines der Überwachungsmodule (1A, 1B) mit einem Gehäuse (13) in der Form eines anlagentypischen Elements, wie der Form eines Schottersteins, vorgesehen und anlagentypisch in die Anlage (1000) integriert wird.

3. Verfahren nach Anspruch 1 oder 2, **dadurch gekennzeichnet, dass** für lokale Sensorsignale im Zentralcomputer (101) oder in den Computermodulen (11) Frequenzmuster und/oder Stimmmuster und/oder Wortmuster ermittelt und mit gespeicherten Mustersignalen oder Musterinformationen (M) verglichen werden.

4. Verfahren nach einem der Ansprüche 1 - 3, **dadurch gekennzeichnet,**
**dass** die lokalen Sensorsignale in jedem der Überwachungsmodule (1A, 1B) analysiert und nach Vergleich mit Mustersignalen oder Musterinformationen (M) als Ereignis (E1, E2, ..., En) je einer Ereignisklasse zugeordnet werden, und/oder
**dass** die lokalen Sensorsignale oder Informationen im Zentralcomputer (101) analysiert und nach Vergleich mit Mustersignalen oder Musterinformationen (M) als Ereignis (E1, E2, ..., En) je einer Ereignisklasse zugeordnet werden, und
**dass** den einzelnen Ereignisklassen Regeln zugeordnet sind, entsprechend denen die Ereignisse (E1, E2, ..., En) zu behandeln sind.

5. Verfahren nach einem der Ansprüche 1 - 4, **dadurch gekennzeichnet, dass** den Ereignisklassen (E1, E2, ..., En) je ein Gewichtungsfaktor (G1, G2, ..., Gn), der in Abhängigkeit der Relevanz für das Eindringen von Personen gewählt ist, zugeordnet ist und dass der Entscheid zum Vorliegen eines Eindringens von Personen unter Berücksichtigung der zugeordneten Gewichtungsfaktoren (G1, G2, ..., Gn) gefällt wird, wobei für die Anzahl (S) der gewichteten Ereignisse (E1, E2, ..., En) vorzugsweise ein Mittelwert gebildet wird, der mit einem Schwellwert (TH) verglichen wird.

6. Verfahren nach einem der Ansprüche 1 - 5, **dadurch gekennzeichnet, dass** den Ereignisklassen (E1, E2, ..., En) je ein Unsicherheitsfaktor (%1, %2, ..., %n), der das Mass der Übereinstimmung der Sensorsignale oder Informationen mit den Mustersignalen oder Musterinformationen (M) repräsentiert, zugeordnet wird und dass der Entscheid zum Vorliegen eines Eindringens von Personen unter Berücksichtigung der zugeordneten Unsicherheitsfaktoren (%1, %2, ..., %n) gefällt wird, wobei für die Anzahl (S) der mit den Unsicherheitsfaktoren (%1, %2, ..., %n) verrechneten und gegebenenfalls gewichteten Ereignisse (E1, E2, ..., En) vorzugsweise ein Mittelwert gebildet wird, der mit dem Schwellwert (TH) verglichen wird.

7. Verfahren nach einem der Ansprüche 1 - 6, **dadurch gekennzeichnet, dass** die von den Überwachungsmodulen (1A, 1B) abgegebenen lokalen Sensorsignale oder Informationen im Zentralcomputer (101) ausgewertet, gegebenenfalls miteinander verknüpft werden, um Ereignisabläufe zu ermitteln.

8. Verfahren nach einem der Ansprüche 1 - 7, **dadurch gekennzeichnet, dass** die Ereignisse und Ereignisabläufe unter Berücksichtigung von Ortsinformationen der Anlage (1000) und/oder von Positionsdaten der Überwachungsmodule (1A, 1B), die vorzugsweise je ein Lokalisierungsmodul, wie ein GPS-Modul, aufweisen, ermittelt und ausgewertet werden.

9. Verfahren nach Anspruch 7 oder 8, **dadurch gekennzeichnet, dass** für die Ereignisabläufe und Ereignisdetails ermittelt werden, wie die Anzahl der Personen, das Geschlecht der Personen, das Bewegungsverhalten der Personen, der Bewegungsverlauf der Personen, Sprache der Personen, Schlüsselworte der Personen, physikalische Eigenschaften der Personen, die Bekleidung der Personen, mitgeführte Werkzeuge, mitgeführte Geräte und Telekommunikationsmittel.

10. Verfahren nach einem der Ansprüche 1 - 9, **dadurch gekennzeichnet, dass** die Überwachungsmodule (1A, 1B) über bidirektionale Kommunikationskanäle miteinander verbunden sind und/oder dass der Zentralcomputer (101) über einen unidirektionalen oder bidirektionalen Kommunikationskanäle je mit wenigstens einem der Überwachungsmodule (1A, 1B) verbunden ist, und
a) dass die von jedem der Überwachungsmodule (1A, 1B) abgegebenen lokalen Sensorsignale oder Informationen direkt von jedem der Überwachungsmodul (1A, 1B) oder indirekt über eines der Überwachungsmodule (1A, 1B) zum Zentralcomputer (101) übertragen werden; und/oder
b) dass jedes der Überwachungsmodule (1A, 1B) durch wenigstens eines der benachbarten Überwachungsmodule (1A, 1B) überwacht wird, und/oder
c) dass das Überwachungssystem (100) in Abhängigkeit der im Betriebszustand befindlichen Überwachungsmodule (1A, 1B) jeweils konfiguriert oder rekonfiguriert wird.

11. Verfahren nach einem der Ansprüche 1 - 10, **dadurch gekennzeichnet, dass** eine Alarmmeldung zum Vorliegen des Eindringens von Personen zusammen mit einem Alarmreport, der vorzugsweise ermittelte Ereignisabläufe und Ereignisdetails umfasst, visuell oder visuell und akustisch auf wenigstens einem stationären oder mobilen Terminal (110) des Überwachungspersonals angezeigt wird.

12. System (100) zur Überwachung einer Anlage (1000) mit zu schützenden Gegenständen (1020), insbesondere einer Eisenbahnanlage mit Rollmaterial (1020), hinsichtlich des Eindringens von Personen, nach einem der Ansprüche 1 - 11, mit einem Überwachungssystem (100) umfassend wenigstens einen Sensor (15) zur Erfassung von Emissionen der Personen oder von Geräten der Personen, wie Geräuschen, Gasen, Strahlung und Erschütterungen, und zur Abgabe entsprechender Sensorsignale sowie wenigstens eine Computereinheit (11; 101) mit einem Überwachungsprogramm (19, 109), zur Verarbeitung der Sensorsignale und zur Ermittlung von Informationen zu den eindringenden Personen, umfassend
wenigstens einen Zentralcomputer (101) mit einer Speichereinheit (102) zur Speicherung von Mustersignalen oder Musterinformationen (M), die für das Eindringen der Personen typische und gegebenenfalls für die Anlage (1000) typische Ereignisse (E1, E2, ..., En) repräsentieren, und
mehrere Überwachungsmodule (1A, 1B),
- die innerhalb der Anlage (1000) voneinander beabstandet angeordnet sind,
- die je wenigstens einen Sensor (15) aufweisen, mit dem Emissionen erfassbar sind,
- die je wenigstens ein Computermodul (11) mit einem lokalen Überwachungsprogramm (19) zur Verarbeitung lokaler Sensorsignale und gegebenenfalls zur Ermittlung lokaler Informationen aufweisen, und
- die je wenigstens eine Kommunikationseinheit (12) zur direkten oder indirekten Übertragung der lokalen Sensorsignale oder Informationen zum Zentralcomputer (101) aufweisen, und
dass der Zentralcomputer (101) ein zentrales Überwachungsprogramm (109) aufweist, mittels dessen die von den Überwachungsmodulen (1A, 1B) abgegebenen lokalen Sensorsignale oder Informationen direkt oder nach Bearbeitung mit den in der Speichereinheit (102) gespeicherten Mustersignalen oder Musterinformationen (M) vergleichbar sind, um das Eindringen der Personen zu detektieren und zu melden.

13. Überwachungssystem (100) nach Anspruch 12, **dadurch gekennzeichnet, dass** wenigstens eines der Überwachungsmodule (1A, 1B) mit einem Gehäuse (13) in der Form eines anlagentypischen Elements, wie der Form eines Schottersteins, vorgesehen ist und anlagentypisch in die Anlage (1000) integriert ist.

14. Überwachungssystem (100) nach Anspruch 12 oder 13, **dadurch gekennzeichnet, dass** das zentrale Überwachungsprogramm (109) des Zentralrechners (101) und/oder das lokale Überwachungsprogramm (19) der Überwachungsmodule (1A, 1B) ein Stimmkennungsmodul und/oder ein Spracherkennungsmodul aufweist, mittels dessen erfasste akustische Signale hinsichtlich des Vorliegens von Sprache, Spracheigenschaften oder Worten auswertbar sind.

15. Überwachungsmodul (1A; 1B) insbesondere für ein Überwachungssystem (100) nach Anspruch 13 oder 16,
- mit wenigstens einem Sensor (15) zur Erfassung von Emissionen,
- mit wenigstens einem Computermodul (11) mit einem lokalen Überwachungsprogramm (19) zur Verarbeitung lokaler Sensorsignale und gegebenenfalls zur Ermittlung lokaler Informationen,
- mit wenigstens einer Kommunikationseinheit (12) zur direkten oder indirekten Übertragung der lokalen Sensorsignale oder Informationen zu einem Zentralcomputer (101), und
- mit einem Gehäuse (13) in der Form eines anlagentypischen Elements, wie der Form eines Schottersteins.

16. System (100) zur Überwachung einer Anlage (1000) mit zu schützenden Gegenständen (1020), insbesondere einer Eisenbahnanlage mit Eisenbahnwagen (1020), hinsichtlich des Eindringens von Personen, nach einem der Ansprüche 1 - 11, mit einem Überwachungssystem (100) umfassend wenigstens einen Sensor (15) zur Erfassung von Emissionen der Personen oder von Geräten der Personen, wie Geräuschen, Gasen, Strahlung und Erschütterungen, und zur Abgabe entsprechender Sensorsignale sowie wenigstens eine Computereinheit (11; 101) mit einem Überwachungsprogramm (19, 109), zur Verarbeitung der Sensorsignale und zur Ermittlung von Informationen zu den eindringenden Personen, umfassend wenigstens einen Zentralcomputer (101) mit einer Speichereinheit (102) zur Speicherung von Mustersignalen oder Musterinformationen (M), die für das Eindringen der Personen typische und gegebenenfalls für die Anlage (1000) typische Ereignisse (E1, E2, ..., En) repräsentieren, und eines oder mehrere Überwachungsmodule nach Anspruch 15.
